# EUROPEAN PATENT APPLICATION

(11) **EP 3 065 423 A1**
(43) Date of publication of application: **07.09.2016**
(21) Application number: 16157041.1
(22) Date of filing: 24.02.2016
(51) Int. Cl.: H04S 7/00, G01S 11/00, G01S 13/08

(54) **TECHNIQUES FOR CONTROLLING DEVICES BASED ON USER PROXIMITY**

(30) Priority: 05.03.2015 US 201514639897
(71) Applicant: Harman International Industries, Incorporated, Stamford, CT 06901 (US)
(72) Inventor: CHATTERJEE, Dibyendu, Stamford, CT Connecticut 06901 (US)
(74) Representative: Grünecker Patent- und Rechtsanwälte PartG mbB

(57) **Abstract**

A user device is configured to estimate the proximity of a user and then perform various functions based on that proximity. The user device may enter a specific mode of operation when the user resides within a threshold proximity to the user device. The user device may also adjust various settings in proportion to the proximity of the user to the user device. The user device may also interoperate with a mobile device to negotiate responsibilities for performing various tasks on behalf of the user based on the relative proximity of the user to the user device and the mobile device.

## Description

### BACKGROUND

### Field of the Disclosed Embodiments

The disclosed embodiments relate generally to personal devices and, more specifically, to techniques for controlling devices based on user proximity.

### Description of the Related Art

The term "lifestyle product" broadly refers to any form of technology designed to improve the lifestyle of a user. Such products may include entertainment systems, mobile computing systems, communication devices, multimedia centers, and so forth. For example, a portable speaker is widely recognized as a lifestyle product because the portability of such speakers allows users to enjoy listening to music in a wide variety of settings, thereby improving the lifestyle of those users. Another typical example of a lifestyle product is a docking station for mobile devices. A conventional docking station allows a user to "dock" a mobile device, such as a cellular phone or tablet computer. When docked, the mobile device can be charged, and music stored on the mobile device can be played through speakers associated with the dock.

Lifestyle products oftentimes are designed to comply with human-machine interface (HMI) guidelines in order to streamline the use of such products. One HMI guideline specifies that a product should require as little human interaction as possible. However, typical lifestyle products can nevertheless require a fair amount of human interaction in order to operate properly. For example, a conventional docking station usually requires the user to interact with a rather complex menu in order to select a particular operating mode, gather data from a docked mobile device, and then perform some function, such as playing music.

As the foregoing illustrates, conventional lifestyle products that are meant to improve the lifestyle users may actually end up adding complications to the lives of those users. Accordingly, what would be useful is an improved technique for controlling the operation of lifestyle products.

### SUMMARY

One or more embodiments set forth include a computer-implemented method for controlling a first device relative to a second device, including determining a first distance between the first device and the second device that reflects a proximity of a user relative to the first device, determining that the first distance satisfies at least one condition, and in response, causing the first device to execute at least one predetermined operation.

At least one advantage of the disclosed embodiments is that the user is able to control the user device with minimal effort, thereby increasing the usability of the user device. Since the user device responds to the proximity of the user, the user can cause the user device to perform a wide variety of different functions without directly initiating those actions.

### BRIEF DESCRIPTION OF THE SEVERAL VIEWS OF THE DRAWINGS

So that the manner in which the recited features of the one more embodiments set forth above can be understood in detail, a more particular description of the one or more embodiments, briefly summarized above, may be had by reference to certain specific embodiments, some of which are illustrated in the appended drawings. It is to be noted, however, that the appended drawings illustrate only typical embodiments and are therefore not to be considered limiting of its scope in any manner, for the scope of the invention subsumes other embodiments as well.
Figure 1 illustrates a system configured to control the operation of a user device based on the proximity of a user, according to various embodiments;
Figure 2 is a block diagram of the user device shown in Figure 1, according to various embodiments;
Figure 3 is a block diagram of the mobile device shown in Figure 1, according to various embodiments;
Figure 4 is a block diagram of the wearable device shown in Figure 1, according to various embodiments;
Figures 5A-5B illustrate exemplary scenarios where the user device of Figure 1 enters a specific operating mode based on the proximity of the user to the user device, according to various embodiments;
Figure 6 is a flow diagram of method steps for a entering a specific operating mode based on user proximity, according to various embodiments;
Figures 7A-7B illustrate exemplary scenarios where the user device of Figure 1 adjusts a speaker volume level based on the proximity of the user to the user device, according to various embodiments;
Figures 8A-8B illustrate exemplary scenarios where the user device of Figure 1 adjusts a microphone gain level based on the proximity of the user to the user device, according to various embodiments;
Figure 9 is a flow diagram of method steps for adjusting configuration parameters of a user device based on user proximity, according to various embodiments.
Figures 10A-10B illustrate exemplary scenarios where the user device and mobile device of Figure 1 interoperate to perform tasks based the proximity of the user to the user device, according to various embodiments; and
Figure 11 is a flow diagram of method steps for selecting a specific device to perform tasks on behalf of a user based on user proximity, according to various embodiments.

### DETAILED DESCRIPTION

In the following description, numerous specific details are set forth to provide a more thorough understanding of certain specific embodiments. However, it will be apparent to one of skill in the art that other embodiments may be practiced without one or more of these specific details or with additional specific details.

### System Overview

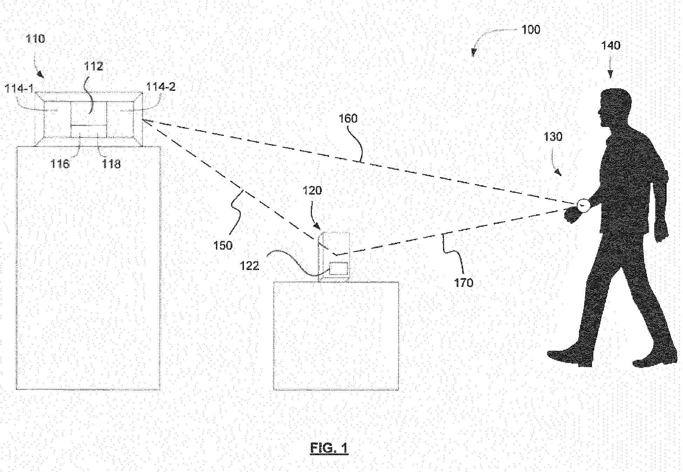

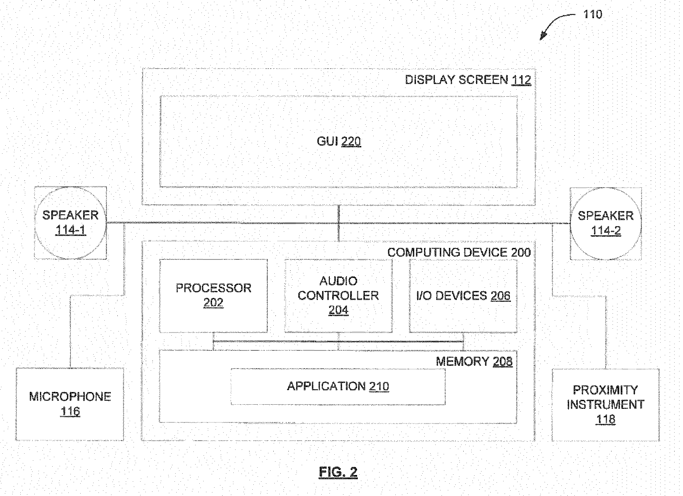

Figure 1 illustrates a system configured to control the operation of a user device based on the proximity of a user, according to various embodiments. As shown, a system 100 includes, without limitation, a user device 110, a mobile device 120, and a wearable device 130 that may be worn by a user 140. User device 110 is generally a multimedia device, such as, for example and without limitation, a portable speaker, docking station, or any other type of "lifestyle product." Mobile device 120 is generally a mobile computing platform, and could be a cellular telephone, tablet computer, laptop computer, or any other type of portable computing and communication device, without limitation. Wearable device 130 generally includes miniature electronic circuitry configured to perform specific functions, such as, for example, indicating the position of user 140 in three-dimensional (3D) space, capturing input from user 140, relying information between other devices, and so forth, without limitation. Wearable device 140 may reside within jewelry, clothing, or other wearable accessories. Exemplary implementations of user device 110, mobile device 120, and wearable device 130 are described in greater detail below in conjunction with Figures 2, 3, and 4, respectively.

User device 110 is configured to measure a distance 150 between user device 110 and mobile device 120. User device is also configured to measure a distance 160 between user device 110 and wearable device 130. In one embodiment, mobile device may be configured to measure distance 150, and may also be configured to measure a distance 170 between mobile device 120 and wearable device 130. In another embodiment, wearable device 130 may be configured to measure distance 160 and distance 170.

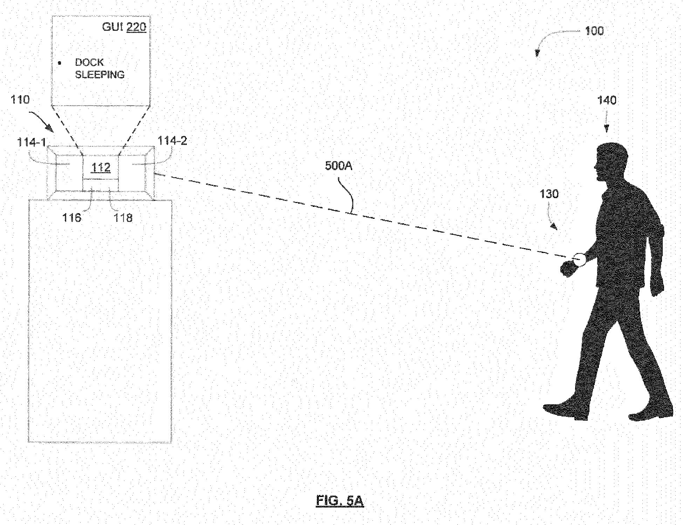

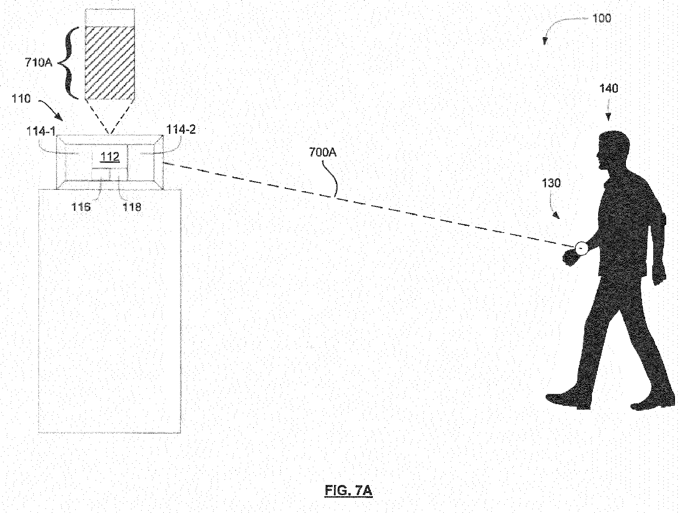

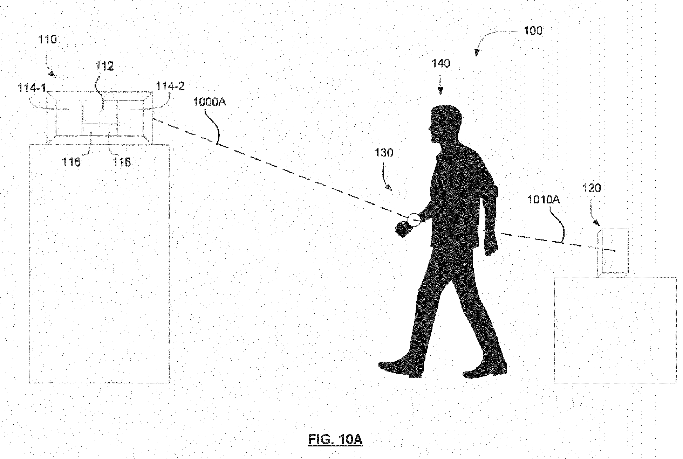

User device 110 and /or mobile device 120 are configured to perform a range of different functions depending on distances 150, 160, and 170 and the measurements thereof. As described in greater detail below in conjunction with Figures 5A-6, user device 110 is configured to become active and possibly enter a specific mode of operation upon determining that distance 160 falls beneath a certain threshold. User device 110 may also adjust various operational parameters, including a speaker volume level and/or microphone gain level, in proportion to distance 160, as described in greater detail below in conjunction with Figures 7A-9. In addition, user device 110 and mobile device 120 may negotiate responsibility for performing certain tasks on behalf of user 140, depending on distances 160 and 170, as described in greater detail below in conjunction with Figures 10A-11.

In Figure 1, user device 110 includes a display screen 112, speakers 114-1 and 114-2, a microphone 116, and a proximity instrument 118. Display screen 112 is configured to display a graphical user interface (GUI) that user 140 may manipulate to cause user device 110 to perform various functions. Speakers 114 are configured to output audio, such as music and/or voice, without limitation. The audio output by speakers 114 may originate within user device 110 or be streamed from mobile device 120. Microphone 116 is configured to receive audio input from user 140, including voice signals. Proximity instrument 118 is configured to estimate various distances, including distances 150 and 160.

Proximity instrument 118 may include a wide variety of different types of hardware and/or software and perform a wide variety of different functions in order to estimate the aforementioned distances. For example, and without limitation, proximity instrument 118 could include hardware configured to determine a received signal strength indication (RSSI) associated with signals received from mobile device 120. Mobile device 120 could emit a signal, such as a Bluetooth beacon, and proximity sensor 118 could then identify the RSSI of the received beacon and then estimate distance 160 based on that RSSI.

In another example, and without limitation, proximity instrument 118 could include an ultrasonic microphone configured to detect an ultrasonic pulse generated by wearable device 130. Proximity instrument 118 could analyze the received ultrasonic pulse to determine, time-of flight, attenuation, and other attributes of the received pulse, and then estimate distance 160 based on those attributes. Further, proximity instrument 118 could also include an ultrasonic transmitter configured to transmit an ultrasonic pulse to wearable device 130. Wearable device 130 may receive that pulse and then participate in estimating distance 160.

In some embodiments, mobile device 120 may also be configured to estimate distances in like fashion as user device 110. To support such functionality, mobile device 120 may include a proximity instrument 122. Proximity instrument 122 may operate in similar fashion to proximity instrument 118 described above, thereby providing estimates of distances 150 and 170 to mobile device 120. Mobile device 120 may then perform various functions based on those distance estimates, in substantially similar fashion as user device 110, and may also interoperate with user device 110 based on those distance estimates, as described in greater detail herein.

Persons skilled in the art will readily recognize that a wide variety of different techniques may be implemented in order to estimate the various distances 150, 160, and 170. The various examples discussed above are provided for exemplary purposes only, and are not meant to limit the scope of the present invention. Generally, any technically feasible approach to determining the distance between two objects may be implemented when estimating distances 150, 160, and 170.

### Hardware Overview

Figure 2 is a block diagram of the user device shown in Figure 1, according to various embodiments. As shown, user device 110 includes some of the same elements shown in Figure 1, including display screen 112, speakers 114-1 and 114-2, microphone 116, and proximity instrument 118, In addition, user device 110 includes, without limitation, a computing device 200 that is configured to manage the overall operation of user device 110.

Computing device 200 includes, without limitation, a processor 202, an audio controller 204, input/output (I/O) devices 206, and memory 208, coupled together. Processor 202 may be a central processing unit (CPU), application-specific integrated circuit (ASIC), or any other technically feasible processing hardware that is confgured to process data and execute computer programs. Audio controller 204 includes specialized audio hardware for causing speakers 114 to output acoustic signals. I/O devices 206 include devices configured to receive input, devices configured to provide output, and devices configured to both receive input and provide output. Memory 208 may be any technically feasible module configured to store data and computer programs. Memory 208 includes an application 210.

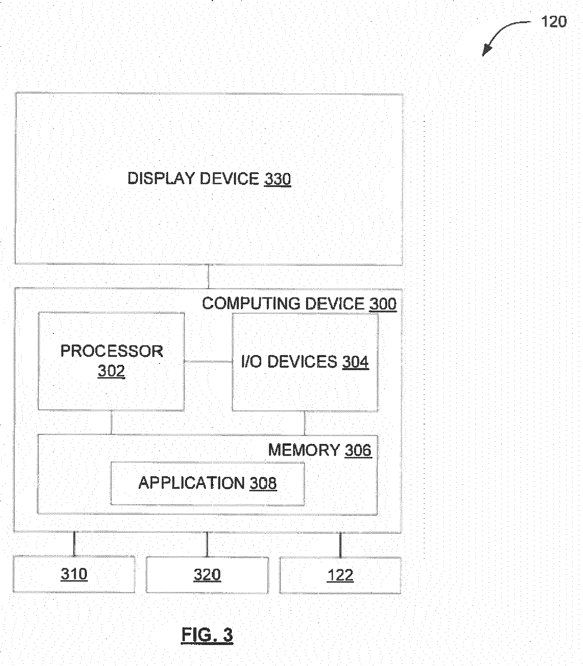

Application 210 could be be a software application, a firmware application, and so forth, without limitation. Processor 202 is configured to execute application 210 in order to manage the overall operation of user device 110. Application 210 may specify a set of actions that processor 202 should take in response to distance measurements received from proximity instrument 118. For example, and without limitation, application 210 could specify that processor 202 should cause user device 110 to enter standby mode when proximity instrument 118 indicates that user 140 has approached user device 110 to within a threshold distance. In doing so, processor could cause display screen 112 to display GUI 220, as is shown. In general application 210 may be executed in order to implement any of the proximity-related functionality described herein. Application 210 may also facilitate interoperations between user device 110 and mobile device 120. Mobile device 120 is described in greater detail below in conjunction with Figure 3.

Figure 3 is a block diagram of the mobile device shown in Figure 1, according to various embodiments. As shown, mobile device 120 includes, without limitation, a computing device 300 coupled to a microphone 310, a speaker 320, and a display device 330. Computing device 300 is also coupled to proximity instrument 122, described above in conjunction with Figure 1.

Computing device 300 includes, without limitation, a processor 302, I/O devices 304, and memory 306, which, in turn, includes application 308. Processor 302 may be any technically feasible unit configured to process data and execute computer programs. I/O devices 304 includes device configured to receive input, provide output, and perform both input and output operations. Memory 306 may be a technically feasible storage medium. Application 308 may be software, firmware, and the like. Processor 302 is configured to execute application 308 to manage the overall operation of mobile device 120.

In embodiments where mobile device 120 provides access to a cellular network, processor 302 may execute application 308 to facilitate telephone conversations for user 140. In doing so, mobile device 120 may rely on microphone 310 to capture voice signals from user 140, and speaker 320 to generate audio signals for user 140. In further embodiments, user device 110 may interoperate with mobile device 120 in order to perform various input and output operations on behalf of mobile device 120 to support those telephone conversations, thereby performing a speakerphone functionality. Specifically, user device 110 may receive voice input from user 140 instead of microphone 310, and user device 110 may output audio associated with the telephone conversation instead of speaker 320. In addition, user device 110 and mobile device 120 may negotiate which of the two devices should manage telephone conversations on behalf of user 140 based on the proximity of user 140 to either, or both, of the two devices.

For example, user device 110 and/or mobile device 120 could determine that user 140 is closer to user device 110 than to mobile device 120. User device 110 and mobile device 120 could then negotiate that user device 110 should handle telephone conversations on behalf of user. Conversely, user device 110 and/or mobile device 120 could determine that user 140 is closer to mobile device 120 than to user device 110. User device 110 and mobile device 120 could then negotiate that mobile device 120 should handle telephone conversations on behalf of user. These specific examples are also discussed in greater detail below in conjunction with

### Figures 10A-10B.

As mentioned above, mobile device 120 may rely on proximity instrument 122 to measure various distances, including distances 150 and 170 shown in Figure 1. For example, and without limitation, proximity instrument 122 could exchange signals with proximity instrument 118 within user device 110 in order to measure distance 150. In another example, and without limitation, proximity instrument 122 could be configured to exchange signals with wearable device 130 in order to measure distance 170. Like user device 110 and mobile device 122, wearable device 130 also includes a proximity instrument configured to enable the distance measuring functionality described herein.

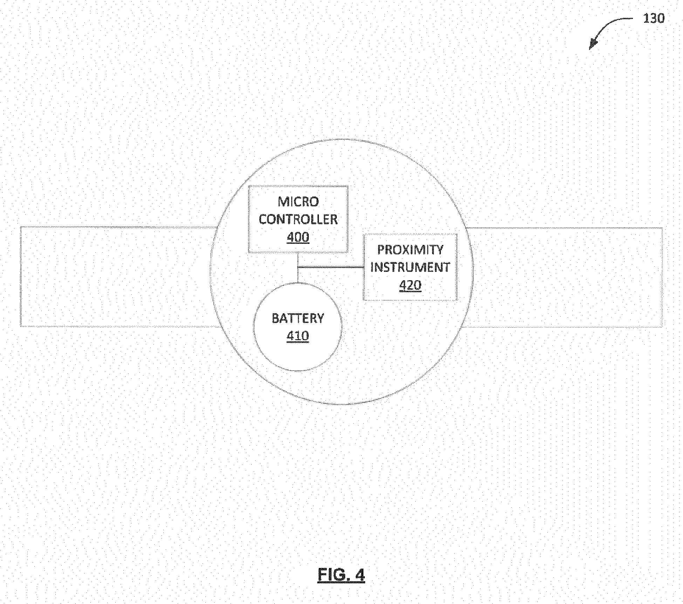

Figure 4 is a block diagram of the wearable device shown in Figure 1, according to various embodiments. As shown, wearable device 130 includes, without limitation, a microcontroller 400 coupled to a battery 410 and to a proximity instrument 420. Microcontroller 400 may include any combination of processing and memory hardware. Battery 410 is a source of power for microcontroller 400 and proximity instrument 420. Proximity instrument 420 may be similar to proximity instruments 118 and 122 described above in conjunction with Figures 1-3.

Referring generally to Figures 1-4, user device 110, mobile device 120, and wearable device 130 may interoperate in any technically feasible fashion in order to measure the various distances among those devices. In doing so, proximity instruments 118, 122, and 420 may transmit and/or receive any technically feasible type of signal, including radio frequency (RF) signals, optical signals, ultrasonic signals, and so forth, without limitation. In addition, proximity instruments may exchange signals, i.e. in a handshaking fashion, to measure relative distances.

As a general matter, any specif technique used to measure distances between the various devices described herein may be implemented without departing from the general scope and spirit of the present invention. Additionally, the scope of the present invention is in no way limited by or to a specific distance measurement technique.

### Exemplary Scenarios of Proximity-Based Device Control and Associated Flow Diagrams

Figures 5A-5B illustrate exemplary scenarios where the user device of Figure 1 enters a specific operating mode based on the proximity of the user to the user device, according to various embodiments.

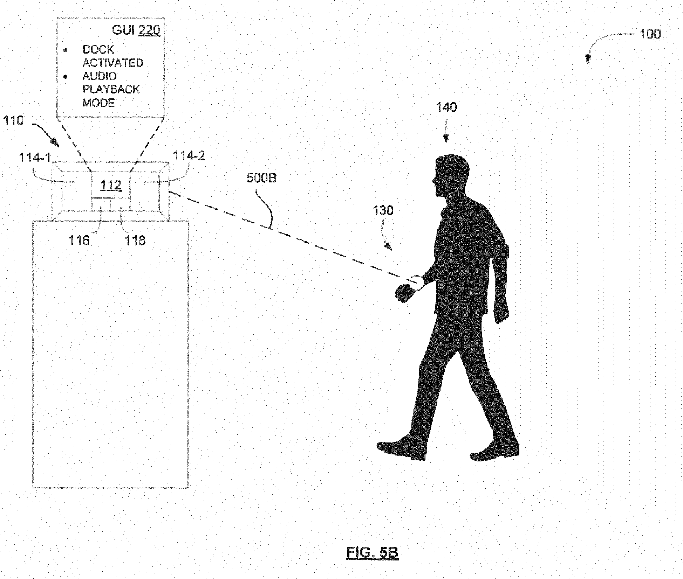

In Figure 5A, system 100 is shown to include some of the same elements as shown in Figure 1, including user device 110 and wearable device 130. Mobile device 120 has been omitted for clarity. As also shown, wearable device 130 is positioned at a distance 500A from user device 110. User device 110 and wearable device 130 may interoperate to measure distance 500A in the fashion described above. For example, and without limitation, wearable device 130 could emit a signal to user device 110, and user device 110 could then measure the RSSI of the received signal. Based on the measured RSSI, user device 110 could estimate distance 500A. Generally, user device 110 may rely on distance 500A as an indicator of the proximity of user 140. In Figure 5A, user device 110 operates in a "sleeping" mode, as indicated by GUI 220. When operating in the sleeping mode, user device 110 may conserve power. User device 110 may change operating mode when user 140 approaches user device 110, as described in greater detail below in conjunction with Figure 5B.

In Figure 5B, user 140 has approached user device 110, and distance 500A has correspondingly decreased to a smaller distance 500B. If user device 110 determines that distance 500B falls beneath a threshold, user device 110 may then exit sleeping mode and enter standby mode, as indicated by GUI 220. In operation, user device 110 may periodically monitor the distance between user device 110 and wearable device 130 in rea time, and compare the measured distance to the threshold. If the measured distance falls beneath the threshold at any given point in time, user device 110 may then enter standby mode.

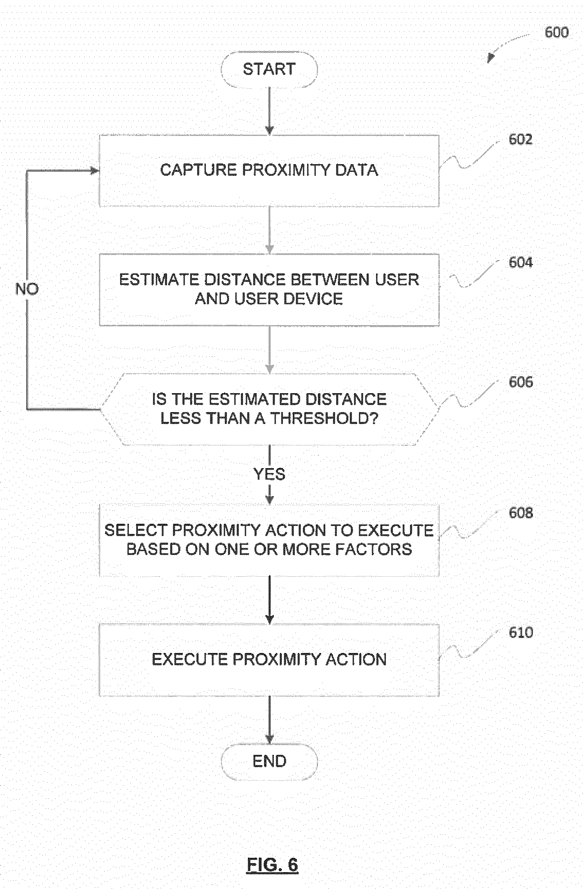

Referring generally to Figures 5A-5B, persons skilled in the art will understand that user device 110 may perform a wide variety of different actions depending on whether user 140 has crossed to within a certain threshold proximity of user device 110. In one embodiment, user device 110 may also enter a specific mode of operation, such as, e.g., audio playback mode, as is shown. User device 110 may also determine the particular mode to enter based on, for example, the operating mode of mobile device 120, user preferences, the speed with which user 140 approaches user device 110, and so forth, without limitation. Figure 6, described below, describes the general functionality discussed above in conjunction with Figures 5A-5B in stepwise fashion.

Figure 6 is a flow diagram of method steps for a entering a specific operating mode based on user proximity, according to various embodiments. Although the method steps are described in conjunction with the systems of Figures 1-5B, persons skilled in the art will understand that any system configured to perform the method steps, in any order, is within the scope of the present invention.

As shown, a method 600 begins at step 602, wherein user device 110 captures proximity data that reflects the position of user 140. In doing so, user device 110 may measure the distance between user device 110 and wearable device 130. User device 110 may also interact with wearable device to capture position and/or distance information, transmit and/or receive signals from wearable device 130, and so forth, without limitation. User device 110 may also interact with mobile device 120 in order to capture proximity data. The proximity data may include RSSI data, time of flight data, and so forth, without limitation.

At step 604, user device 110 estimates the distance between user device 110 and user 140. In doing so, user device 110 processes the proximity data gathered at step 602. For example, and without limitation, user device 110 could use RSSI data as an index into a look-up table that provides a mapping between a range of RSSI values and a corresponding range of distances.

At step 606, user device 110 determines whether the estimated distance falls beneath a threshold. If the estimated distance does not fall beneath the threshold, then the method 600 returns to step 602 and proceeds in the fashion described above. If, at step 606, user device 110 determines that the estimated distance does, in fact, fall beneath the threshold then the method 600 proceeds to step 608.

At step 608, user device 110 selects a proximity action to execute based on one or more factors. The factors may include user preferences, a previous operating mode of user device 110, a current operating mode of mobile device 120, and so forth, without limitation.

At step 610, user device 110 executes the proximity action selected at step 608. The proximity action could be, for example, exiting sleep mode and entering standby mode, entering playback mode, and so forth, without limitation. The method 600 then ends. In one embodiment, the method 600 repeats after the distance between user device 110 and user 140 increases to greater than then distance threshold. In another embodiment, the method 600 repeats after a certain amount of time elapses.

User device 100 may also perform a variety of other actions based on the estimated distance between user device 110 and user 140, as described in greater detail below in conjunction with Figures 7A-8B.

Figures 7A-7B illustrate exemplary scenarios where the user device of Figure 1 adjusts a speaker volume level based on the proximity of the user to the user device, according to various embodiments.

In Figure 7A, System 100 is shown to include some of the same elements as shown in Figure 1, including user device 110 and wearable device 130. Mobile device 120 has been omitted for clarity. As also shown, wearable device 130 is positioned at a distance 700A from user device 110. User device 110 and/or wearable device 130 may perform any technically feasible sequence of actions to measure distance 700A. Distance 700A generally approximately reflects the distance of user 140 from user device 110.

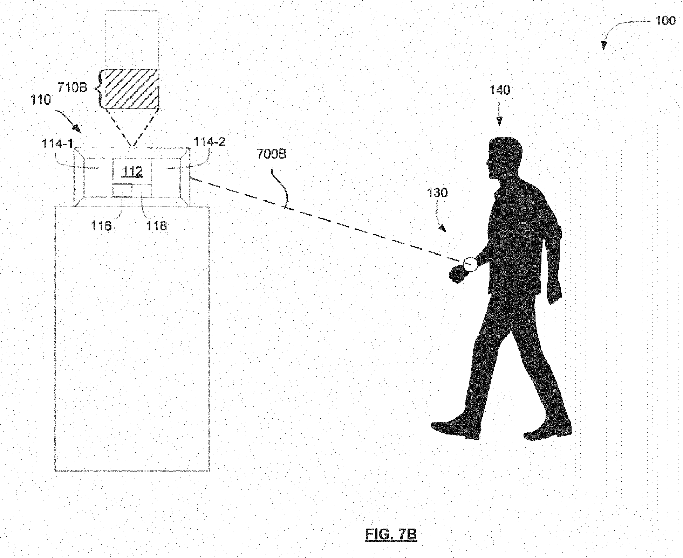

User device 110 is configured to adjust a volume setting associated with speakers 114 based on distance 700A. As is shown, user device 110 has set the volume of speakers 114 to level 710A, which is proportional to distance 700A. User device 110 may implement any technically feasible algorithm for computing a volume level as a function of a distance, including, for example, and without limitation, a linear function, a quadratic function, and so forth. When user 140 approaches user device 110, thereby closing the proximity to user device 110, user device 110 is configured to respond by reducing the volume setting associated with speakers 114, as described in greater detail below in conjunction with Figure 7B.

In Figure 7B, user 110 has approached user device 110, and user device 110 and wearable device 130 now reside a distance 700B apart. User device 110 and/or wearable device 130 are configured to measure distance 700B in similar fashion as described above in conjunction with Figure 7A. User device 110 is configured to adjust the volume setting of speakers 114 to a level 710B that is proportional to distance 700B. In practice, user device 110 measures the proximity of wearable device 140 in real time and then adjusts the volume setting of speakers 114 in real time as well.

Referring generally to Figures 7A-7B, persons skilled in the art will understand that the techniques described herein are equally applicable to scenarios where user 140 walks away from user device 110. Generally, user device 110 adjusts the volume setting in response to the relative positioning of user 140. In some embodiments, user device 110 may also account for the orientation of user device 110 relative to user 140. For example, and without limitation, user device 110 could adjust the volume setting differently depending on whether user 140 resides in front of user device 110 versus to the side of user device 110.

An advantage of the approach described herein is that user device 110 may cause user 140 to perceive the same volume of audio regardless of where user 140 actually resides relative to user device 110. For example, and without limitation, if user 140 walks away from user device 110, then the volume of audio output by user device 110 would not appear to diminish. Likewise, if user 110 approaches user device 110, then the volume of audio output by user device 110 would not appear to increase. These techniques may be especially useful when user device 110 is configured to route telephone calls from mobile device 120 and perform a speakerphone function. In such situations, user 140 may change locations relative to user device 110 and still perceive substantially the same volume associated with a telephone conversation routed by user device 110 and output by user device 110.

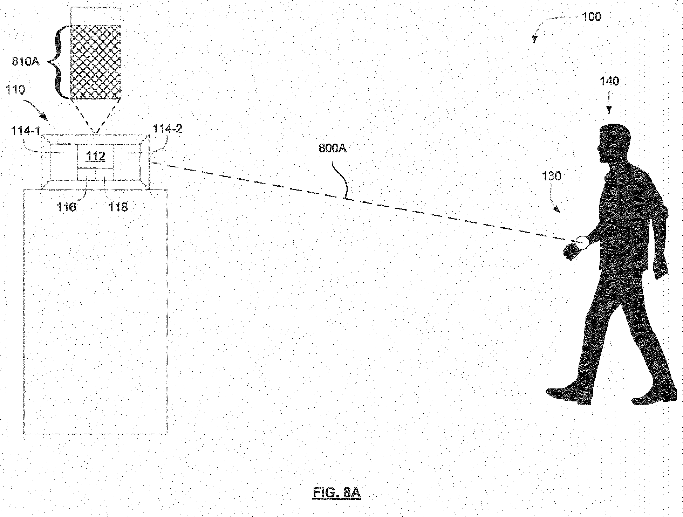

The techniques described above may also be applied to adjusting other settings associated with user device 110 in proportion to user proximity, as described in greater detail below in conjunction with Figures 8A-8B.

Figures 8A-8B illustrate exemplary scenarios where the user device of Figure 1 adjusts a microphone gain level based on the proximity of the user to the user device, according to various embodiments.

In Figure 8A, System 100 is shown to include some of the same elements as shown in Figure 1, including user device 110 and wearable device 130. Mobile device 120 has been omitted for clarity. As also shown, wearable device 130 is positioned at a distance 800A from user device 110. User device 110 and/or wearable device 130 may perform any technically feasible sequence of actions to measure distance 800A, which generally reflects the distance of user 140 from user device 110.

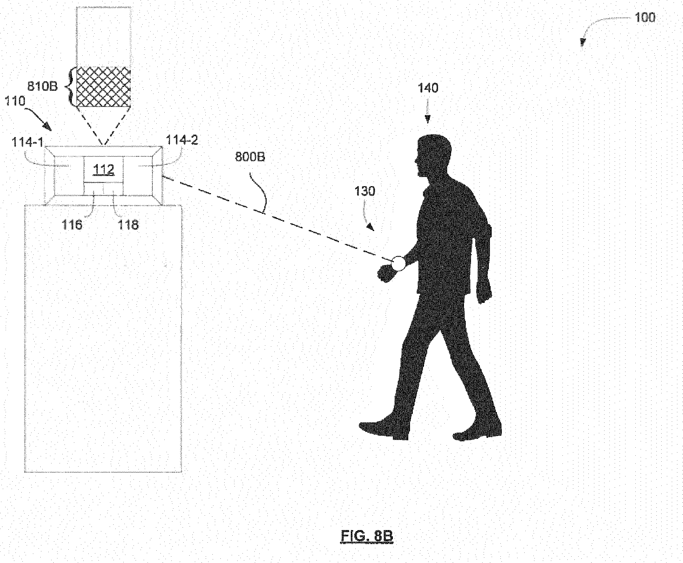

User device 110 is configured to adjust a gain setting associated with microphone 116 based on distance 800A. As is shown, user device 110 has set the gain of microphone 116 to level 810A, which is proportional to distance 800A. User device 110 may implement any technically feasible algorithm for computing a gain level as a function of a distance, including any of those discussed above in conjunction with Figure 7A-7B, without limitation. When user 140 approaches user device 110, thereby closing the proximity to user device 110, user device 110 is configured to respond by reducing the gain setting associated with microphone 116, as described in greater detail below in conjunction with Figure 8B.

In Figure 8B, user 110 has approached user device 110, and user device 110 and wearable device 130 now reside a distance 800B apart. User device 110 and/or wearable device 130 are configured to measure distance 800B in similar fashion as described above in conjunction with Figure 8A. User device 110 is configured to adjust the gain setting of microphone 116 to a level 810B that is proportional to distance 800B. In practice, user device 110 measures the proximity of wearable device 140 in real time and then adjusts the gain setting of microphone 116 in real time as well.

Referring generally to Figures 8A-8B, persons skilled in the art will understand that the techniques described herein are equally applicable to scenarios where user 140 walks away from user device 110. Generally, user device 110 adjusts the gain setting in response to the relative positioning of user 140. In some embodiments, user device 110 may also account for the orientation of user device 110 relative to user 140. For example, and without limitation, user device 110 could adjust the gain setting differently depending on whether user 140 resides in front of user device 110 versus to the side of user device 110.

An advantage of the approach described herein is that user device 110 may transduce audio signals, including voice signals generated by user 140, with the same magnitude regardless of where user 140 actually resides. These techniques may be especially useful when user device 110 is configured to route telephone calls from mobile device 120 and perform a speakerphone function. In such situations, user device 110 may transduce speech signals from user 140 for transmission to another person (i.e., via mobile device 140). By implementing the techniques described herein, the magnitude of those voice signals, from the perspective of the other person, may appear equivalent regardless of the position of user 140 relative to user device 110. For example, and without limitation, if user 140 walks away from user device 110, the magnitude of voice signals transduced by user device 110 to the other person would not appear to diminish. Likewise, if user 110 approaches user device 110, the magnitude of those voice signals would not increase significantly.

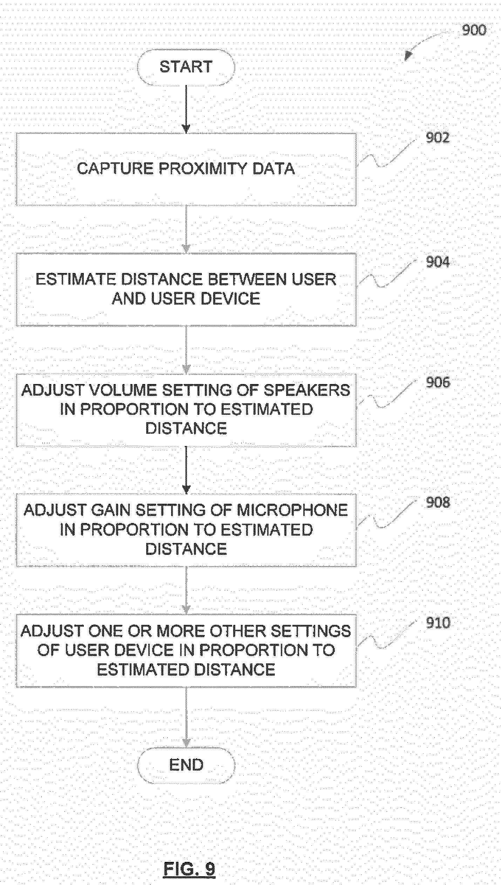

Referring generally to Figures 7A-8B, persons skilled in the art will recognize that the various techniques described in conjunction with those Figures may be implemented to adjust any setting associated with user device 110. For example, and without limitation, user device 110 could adjust a screen brightness setting depending on the proximity of user 110. In another example, without limitation, user device 110 could be configured to emit a ringtone on behalf of mobile device 120 when a call is received, and user device 110 could adjust the volume of that ringtone based on the proximity of user 140. In some embodiments, user device 110 may also perform more diverse adjustments based on the proximity of user 110. For example, and without limitation, user device 110 could select a particular audio equalization setting, select a particular fade and/or balance setting, change audio tracks, select a specific ringtone, and so forth, based on the proximity of user 140. The various techniques described above are also described in stepwise fashion below in conjunction with Figure 9.

Figure 9 is a flow diagram of method steps for adjusting configuration parameters of a user device based on user proximity, according to various embodiments. Although the method steps are described in conjunction with the systems of Figures 1-4 and 7A-8B, persons skilled in the art will understand that any system configured to perform the method steps, in any order, is within the scope of the present invention.

As shown, a method 900 begins at step 902, where user device 110 captures proximity data that reflects the position of user 140. In doing so, user device 110 may measure the distance between user device 110 and wearable device 130. User device 110 may also interact with wearable device to capture position and/or distance information, transmit and/or receive signals from wearable device 130, and so forth, without limitation. User device 110 may also interact with mobile device 120 in order to capture proximity data. The proximity data may include RSSI data, time of flight data, and so forth, without limitation.

At step 904, user device 110 estimates the distance between user device 110 and user 140. In doing so, user device 110 processes the proximity data gathered at step 902. For example, and without limitation, user device 110 could use time-of-flight data as an index into a look-up table that provides a mapping between a range of flight times and a corresponding range of distances.

At step 906, user device 110 adjusts a volume setting associated with speakers 114 in proportion to the estimated distance between user 140 and user device 110. User device 110 may decrease the volume setting or increase the volume setting, depending on whether user 110 moves toward or away from user device 110. In addition, user device 110 may implement any technically feasible function for generating a volume setting based on a distance estimate, including, for example, a linear function, non-linear function, a mapping, and so forth, without limitation.

At step 908, user device 110 adjusts a gain setting associated with microphone 116 in proportion to the estimated distance between user 140 and user device 110. User device 110 may decrease the gain setting or increase the gain setting, depending on whether user 110 moves toward or away from user device 110. In performing step 908, user device 110 may implement any technically feasible function for generating a gain setting based on a distance estimate, including, for example, a linear or non-linear function, look-up table, and so forth, without limitation.

At step 910, user device 110 adjusts one or more other settings in proportion to the estimated distance. The one or more other settings could include, for example, any technically feasible audio setting, video or display setting, communication setting, power setting, and so forth, without limitation. The method 900 may repeat periodically, or upon user device 110 determining that a specific condition has been met. For example, user device 110 could determine that user 140 has changed positions by a threshold amount, and then execute the method 900.

Referring generally to Figures 1-9, in various embodiments mobile device 120 may be configured to perform some or all of the functionality described herein. For example,, and without limitation, mobile device 120 could estimate the proximity of user 140 and then enter a specific mode of operation based on that proximity, thereby performing the functionality described in conjunction with Figures 5A-6. In another example, and without limitation, mobile device 120 could estimate the proximity of user 140 and then adjust one or more settings associated with mobile device 120 based on that proximity, thereby performing the functionality described in conjunction with Figures 7A-9.

In further embodiments, user device 110 and mobile device 120 may interoperate in order to perform the various functionalities described above. For example, and without limitation, user device 110 and mobile device 120 could interoperate to estimate the proximity of user 140 to user device 110, and then user device 110 could enter a specific operating mode, adjust a particular setting, and so forth, based on that proximity. In this example, mobile device 120 would assume the role of wearable device 130.

Interoperation between user device 110 and mobile device 120 may be especially useful in situations where user device 110 is configured to route telephone calls on behalf of mobile device 120, thereby operating as a speakerphone. This type of interoperation is described, by way of example, below in conjunction with Figures 10A-10B

Figures 10A-10B illustrate exemplary scenarios where the user device and mobile device of Figure 1 interoperate to perform tasks based on the proximity of the user to the user device, according to various embodiments.

In Figure 10A, system 100 is shown to include each of the elements shown in Figure 1, including user device 110, mobile device 120, and wearable device 130. User 140 occupies a position between user device 110 and mobile device 120. User device 110 is configured to measure a distance 1000A between user device 110 and wearable device 130, thereby providing an estimate of the proximity of user 140 to user device 110. Likewise, mobile device 120 is configured to measure a distance 1010A between mobile device 120 and wearable device 130, thereby providing an estimate of the proximity of user 140 to mobile device 120.

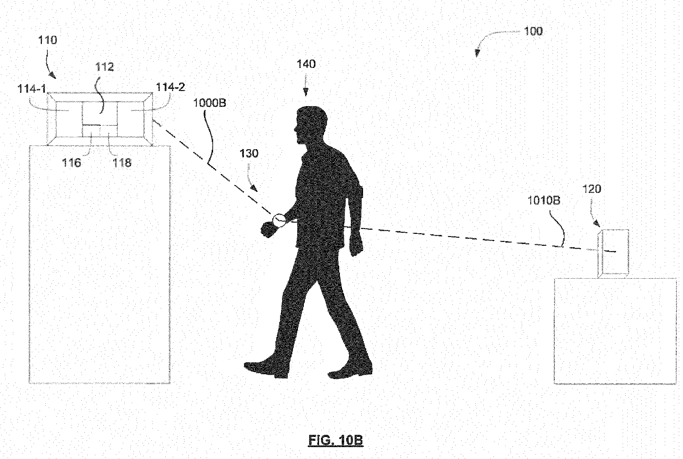

User device 110 and mobile device 120 are configured to compare the relative proximities of user 140 and, based on the comparison of those proximities, determine whether telephone calls received by mobile device 120 should be handled by mobile device 120 directly, or routed through user device 110. In the exemplary scenario shown in Figure 10A, user device 110 and mobile device 120 compare distances 1000A and 1010A, and then determine that distance 1010A is less than distance 1000A. Based on that determination, user device 110 and mobile device 120 interoperate to configure mobile device 120 to handle received telephone calls directly. User device 110 and mobile device 120 may also interoperate to route calls through user device 110 in situations where user 140 is closer to user device 110, as described in greater detail below in conjunction with Figure 10B.

In Figure 10B, user 140 still resides between user device 110 and mobile device 120, but user 140 has changed positions and now resides closer to user device 110 than to mobile device 120. User device 110 is configured to measure a distance 1000B between user device 110 and wearable device 130, thereby providing an estimate of the proximity of user 140 to user device 110. Likewise, mobile device 120 is configured to measure a distance 1010B between mobile device 120 and wearable device 130, thereby providing an estimate of the proximity of user 140 to mobile device 120.

User device 110 and mobile device 120 then compare distances 1000B and 1010B, and then determine that distance 1000B is less than distance 1010B. Based on that determination, user device 110 and mobile device 120 interoperate to configure user device 110 to handle received telephone calls on behalf of mobile device 120.

Referring generally to Figures 10A-10B, user device 110 and mobile device 120 may interoperate in a variety of different ways to negotiate responsibility for handling telephone calls. For example, and without limitation, mobile device 120 could operate as a "master" device to user device 110, and command user device 110 to either route calls on behalf of mobile device 120 or abstain from routing calls. Conversely, user device 110 could operate as the master device relative to mobile device 120. User device 110 and mobile device 120 may also share proximity measurements on an as needed basis in order to facilitate the functionality described herein. For example, and without limitation, user device 110 could measure the proximity of user 14 to user device 1109, and then transmit this measurement to mobile device 120. Mobile device 120 could receive that measurement and then measure the proximity of user 140 to mobile device 120. Mobile device 120 could then compare the two proximity measurements to determine whether calls should be routed through user device 110 or handled directly by mobile device 120.

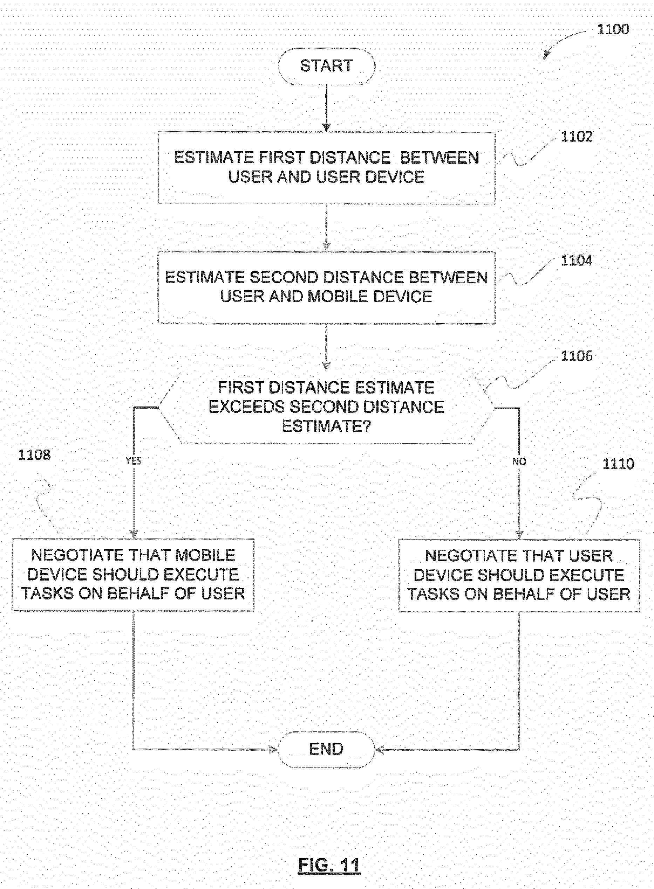

Persons skilled in the art will recognize that user device 110 and mobile device 120 may be configured to negotiate responsibilities for performing many different tasks based on relative user proximity, beyond telephone call routing. For example, and without limitation, user device 110 and mobile device 120 could negotiate which of the two devices should play streaming music. In another example, user device 110 and mobile device 120 could negotiate which of the two devices should execute a specific application, output audio and/or video associated with a specific application, and so forth, without limitation. In general, the negotiation of tasks occurs continuously, so tasks may be seamlessly transferred between user device 110 and mobile device 120 as user 140 changes position. The interoperation techniques described above with respect to user device 110 and mobile device 120 are also described, in stepwise fashion, below in conjunction with Figure 11.

Figure 11 is a flow diagram of method steps for selecting a specific device to perform tasks on behalf of a user based on user proximity, according to various embodiments. Although the method steps are described in conjunction with the systems of Figures 1-4 and 10A-10B, persons skilled in the art will understand that any system configured to perform the method steps, in any order, is within the scope of the present invention.

As shown, a method 1100 begins at step 1102, where user device 110 estimates the distance between user device 110 and user 140. In doing so, user device 110 may communicate with wearable device 130 in order to measure the distance between user device 110 and wearable device 140. At step 1104, mobile device estimates the distance between mobile device 120 and user 140. In doing so, user device 110 may communicate with wearable device 130 in order to measure the distance between mobile device 120 and wearable device 130.

At step 1106, user device 110 and mobile device 120 interoperate to compare the estimated distance between user device 110 and user 140 and the estimated distance between mobile device 120 and user 140. In doing so, user device 110 and/or mobile device 120 may perform some or all processing associated with comparing those distances. In addition, user device 110 and mobile device 120 may share distance estimates with one another, as needed.

If, at step 1106, user device 110 and/or mobile device 120 determine that the estimated distance between user device 110 and user 140 exceeds the estimated distance between mobile device 120 and user 140, then the method 1100 proceeds to step 1108. At step 1108, User device 110 and mobile device 120 negotiate that mobile device 120 should perform tasks on behalf of user 140. Those tasks may include handling input and output operations associated with telephone calls, among other possible tasks.

If, at step 1106, user device 110 and/or mobile device 120 determine that the estimated distance between user device 110 and user 140 exceeds the estimated distance between mobile device 120 and user 140, then the method 1100 proceeds to step 1110. At step 1108, user device 110 and mobile device 120 negotiate that user device 110 should perform tasks on behalf of user 140. Those tasks may include handling input and output operations associated with telephone calls, among other possible tasks.

User device 110 and mobile device 120 may operate in conjunction with one another to perform the method 1100 repeatedly, thereby negotiating responsibilities for tasks on an ongoing basis. In some embodiments, user device 110 and mobile device 120 may perform a separate negotiation for each of the different tasks that may be performed by either device.

In sum, a user device is configured to estimate the proximity of a user and then perform various functions based on that proximity. The user device may enter a specific mode of operation when the user resides within a threshold proximity to the user device. The user device may also adjust various settings in proportion to the proximity of the user to the user device. The user device may also interoperate with a mobile device to negotiate responsibilities for performing various tasks on behalf of the user based on the relative proximity of the user to the user device and the mobile device.

At least one advantage of the disclosed embodiments is that the user is able to control the user device with minimal effort, thereby increasing the usability of the user device. Since the user device responds to the proximity of the user, the user can cause the user device to perform a wide variety of different functions without directly initiating those actions. In addition, the interoperability between the user device and mobile device provide a highly convenient way for the user to perform various tasks in various different locations, since the device that is closest to the user at any given time automatically assumes responsibility for those tasks.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable processors.

The flowchart and block diagrams in the Figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. A non-transitory computer-readable medium storing program instructions that, when executed by a processor, causes the processor to control a first device relative to a second device, by performing the steps of:
determining a first distance between the first device and the second device that reflects a proximity of a user relative to the first device;
determining that the first distance satisfies at least one condition; and
in response, causing the first device to execute at least one predetermined operation.

2. The non-transitory computer-readable medium of claim 1, wherein the step of determining that the first distance satisfies the at least one condition comprises determining that the first distance is less than a threshold value.

3. The non-transitory computer-readable medium of claim 1 or 2, wherein the step of causing the first device to execute the at least one predetermined operation comprises causing the first device to enter a specific operating mode.

4. The non-transitory computer-readable medium of claim 3, wherein the specific operating mode comprises a standby mode.

5. The non-transitory computer-readable medium of one of claims 1 to 4, wherein the step of determining that the first distance satisfies the at least one condition comprises determining that the second device has relocated from a previous position to a current position.

6. The non-transitory computer-readable medium of one of claims 1 to 5, wherein the step of causing the first device to execute the at least one predetermined operation comprises causing the first device to adjust one or more settings in proportion to the first distance.

7. The non-transitory computer-readable medium of claim 6, wherein the one or more settings comprise a volume setting associated with speakers coupled to the first device, and adjusting the one or more settings comprises increasing or decreasing the volume setting.

8. The non-transitory computer-readable medium of claim 6 or 7, wherein the one or more settings comprise a gain setting associated with a microphone coupled to the first device, and adjusting the one or more settings comprises increasing or decreasing the gain setting.

9. The non-transitory computer-readable medium of one of claims 1 to 8, wherein the step of determining that the first distance satisfies the at least one condition comprises determining that the first distance is less than a second distance, wherein the second distance comprises a distance between the second device and a third device.

10. The non-transitory computer-readable medium of claim 9, wherein the step of causing the first device to execute the at least one predetermined operation comprises causing the first device, instead of the third device, to perform a task.

11. The non-transitory computer-readable medium of claim 10, wherein causing the first device, instead of the third device, to perform the task comprises:
causing the first device to receive audio input associated with a telephone conversation; and
causing the first device to transmit audio output associated with the telephone conversation to the user.

12. A system, comprising:
a first device that includes:
a first proximity instrument configured to determine a first distance between the first device and a second device that reflects a proximity of a user relative to the first device, and
a processing unit coupled to the first proximity instrument and configured to: determine that the first distance satisfies at least one condition, and
in response, cause the first device to execute at least one predetermined operation; and
the second device that includes:
a second proximity instrument, configured to indicate a position associated with the second device.

13. The system of claim 12, wherein the first proximity instrument is configured to determine the first distance based on the position associated with second device relative to a position associated with the first device.

14. The system of claim 12 or 13, wherein the processing unit is configured to modify one or more operations of the first device upon determining that the first distance meets the at least one condition by executing the at least one action.

15. A computer-implemented method for controlling a first device in response to a second device, the method comprising/performing the steps recited in one of claims 1 to 14.
